# EUROPEAN PATENT SPECIFICATION

(11) **EP 1 894 145 B1**
(45) Date of publication and mention of the grant of the patent: **01.04.2009**
(21) Application number: 06756043.3
(22) Date of filing: 01.06.2006
(51) Int. Cl.: G06K 19/00, G06K 7/00

(54) **METHOD AND DEVICE FOR INCREASED RFID TRANSMISSION SECURITY**
VERFAHREN UND VORRICHTUNG FÜR ERHÖHTE RFID-ÜBERTRAGUNGSSICHERHEIT
PROCEDE ET DISPOSITIF AMELIORANT LA SECURITE DE TRANSMISSION DES IDRF

(30) Priority: 07.06.2005 EP 05104959; 29.11.2005 EP 05111441
(43) Date of publication of application: 05.03.2008
(73) Proprietor: NXP B.V., 5656 AG Eindhoven (NL)
(72) Inventor: TEUWEN, Philippe, NL-5656 AA Eindhoven (NL); THUERINGER, Peter, NL-5656 AA Eindhoven (NL)
(74) Representative: van der Veer, Johannis Leendert
(86) International application number: PCT/IB2006/051761
(87) International publication number: WO 2006/131861

(56) References cited:
- EP-A- 1 124 206
- EP-A1- 1 205 405
- US-A1- 2003 112 972
- US-A1- 2004 066 278

## Description

The invention relates to an RFID tag, an RFID system and a method for communicating between an RFID tag and reader.

The term RFID (radio frequency identification) describes the use of radio frequency signals to provide automatic identification of items. RFID technology is used in numerous applications, most of which require a relatively high standard of security. Also, interoperability between different actors may be required.

Basically, RFID tags are electronic microcircuits equipped with an RF (Radio Frequency) antenna. An RFID tag is a passive electronic device containing data, for example identification data of an item to which the RFID tag is attached. RFID devices are relatively small, and can be attached to virtually every item. The passive RFID tag can be activated and powered by radio-frequent (RF) energy. When this happens, the tag transmits its stored information, via the built-in RF antenna. Thus, data can be read from the tag. Alternatively, information is broadcasted towards the tag and received by the built-in RF antenna. Thus, data can be written to the tag.

An RFID system generally comprises an RFID reader in addition to the RFID tag. The reader receives RF transmissions from the tag and passes the data to a host system for processing. The reader generally also includes an RF transceiver, which generates the RF energy for activating the tag. It should be emphasized that the reader performs both tag reading and writing operations.

As is clear from the above, a feature of the passive RFID tags is that they do not require any battery. An RFID tag is powered directly by the RF energy supplied to it by the RF transceiver. As a consequence, RFID systems generally operate over relatively short communication distances; for example, in a system based on the ISO-14443 standard, the tag and reader generally can no longer communicate when the distance between them becomes greater than 10 centimeters.

This proximity tends to be seen as an inherent security feature. However, it has recently been found that attacks on the RFID system can be performed from further away than expected. For example, a successful attack on the communication from reader to tag has recently been demonstrated at a distance of 50 meters from the RFID system. This is especially a problem when writing information to the tag. For more details, see the Internet article "Picking Virtual Pockets using Relay Attacks on Contactless Smartcard Systems" by Z. Kfir and A. Wool, which can be viewed at web address http://eprint.iacr.org/2005/052.pdf.

It is possible to increase security by establishing of a completely secure communication channel, however this requires a full smartcard solution, where, instead of the relatively simple RFID tags, real smartcards incorporating CPU, RAM, ROM, and means for handling public cryptography operations have to be used. Such a solution is relatively expensive. EP-A-1205405 is acknowledged in the preamble of claim 1.

It is an object of the invention to increase security in the communication between RFID devices, in particular between an RFID tag and an associated RFID reader, at relatively low costs. The invention is out in claims 1 and 2.

The invention makes use of the feature that an RFID communication is strongly asymmetric: the reader-to-tag communication can be eavesdropped from a much larger distance than the tag-to-reader communication. Therefore, in order to increase security, it appears to be sufficient to protect only half of the RFID communication against eavesdropping, in particular the insecure half, which is the reader-to-tag communication.

The tag-to-reader communication channel is still considered as inherently secure, due to the high proximity required to eavesdrop a message broadcast over this channel. The invention makes use of this feature, by using the relatively secure tag-to-reader channel for protecting the relatively insecure reader-to-tag channel.

In a preferred embodiment, when the reader reads information from the tag, the information is sent by the tag as usual. However, when the reader has to write information, the tag first generates random data. Preferably, this random data is then broadcasted over the secure channel to the reader, which uses it to encode information to be written to the tag.

After this, encoded data can be sent over the insecure channel towards the tag. The tag generally stores the random data it generated in a memory, and uses this to decode the information received from the reader. Thus, the original information is written to the tag. However, if an attacker intercepts the communication channel from reader to tag, he will not know which random data was used to encode the information to be written to the tag, and therefore he can only write random bits to the tag's memory when he broadcasts a message over the reader-to-tag channel.

Thus, a relatively secure communication can be obtained with inexpensive means, in particular using an RFID tag. Moreover, the communication according to the invention can be set up faster than when using a completely secure communication channel as there is no cryptographic handshake to process, and software development on the reader is easier as no cryptographic handshake routine need be implemented.

It is well known how to implement a means for generating random numbers into the RFID tag. For example, this can be done using the publicly available INTEL^{®} Random Number Generator design. This design is elucidated in the paper with the same name, that can be retrieved from web address http://cnscenter.future.co.kr/resource/cryto/algorithm/random/criwp.pdf

The block diagram at page 3 shows the involved blocks and the needed functionality. The basis of the random number generator is a general noise source, that can be based on a resistor together with an amplifier that stimulates a first oscillator, which gets sampled by at least a second oscillator. After some digital corrections and statistical shaping the resulting bitstream can be used as random data. Because of the white noise character of the noise source, the generated data can be considered as truly random in mature.

Preferably, the communication method according to the invention shows a one time pad scheme (Vernam cipher) as disclosed in US patent 1,310,719. This scheme requires the use of a true random data generating means in the tag, such as the above mentioned INTEL^{®} Random Number Generator design to generate the pad. Moreover, the pad must be transmitted over a secure channel such as the tag-to-reader communication channel. Encoding of data in the one time pad scheme is straightforward and can be as simple as performing an XOR (exclusive OR) operation on the data using the pad.

Embodiments of the present invention will now be described, by way of example, with reference to the accompanying schematic drawings, in which:
Fig. 1 is a diagram of the method of communication for the RFID system,
Fig. 2 is a schematic diagram of an RFID tag, and
Fig. 3 is a schematic diagram of an RFID reader.

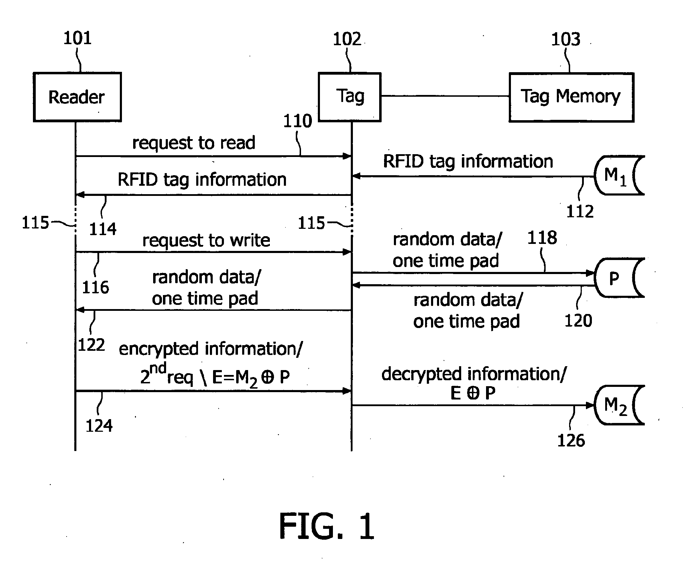

Figure 1 shows schematically RFID communication between reader 101 and tag 102 according to the present invention. When information M₁ is to be read from the tag 102, the reader 101 sends 110 a request to read to the tag 102. The RFID tag 102 answers as usual, namely by directly transmitting 114 the stored information M₁ over the relatively secure tag-to-reader channel. The dashed parts 115 of the lines represent any arbitrary time and/or communication traffic between the reader 101 and the tag 102.

When information M₂ is to be written 126 to the tag 102, the reader 101 sends 116 a request to write to the tag 102. In response to this, the tag 102 activates its random data generator 202 for generating a one time pad P. This pad P is stored 118 in the tag memory 103 itself, or alternatively a dedicated memory in the tag 102, and is subsequently transmitted 122 over the relatively secure channel to the reader 101, in response to the write request. The reader 101 is arranged for encoding the information to be written M₂ involving the pad P, for example by performing an XOR operation. The encoded data E is then sent 124 over the relatively insecure reader-to-tag channel to the RFID tag 102. The tag 102 uses the stored pad P for decoding the encoded data E, thus obtaining original information M₂ to be written 126 to the tag memory 103.

In Fig 1, the entire memory contents M₁ and M₂ are read and written, but in real applications, it is of course possible to retrieve or write only parts or sectors of the memory 103. Also, variable memory sizes can be read or written, if the reader 101 sends a start address and an end address to the tag 102, or a start address and the number of bytes to send or stored. When the tag memory 103 itself is used for storing the pad P in writing, the pad P can be stored in the memory section where information M₂ should be stored, as the pad P can be overwritten by information M₂, thereby erasing the pad P, without problems.

In the scheme set out above, the tag 102 first generated pad P to fill 118 its memory 103 and then sends 122 it to the reader 101, but there is in practice no restriction on this sequence, as long as the tag 102 remembers which pad P was sent 122 to the reader 101. In this scheme, there is no guarantee that the second message (encoded data E) actually comes from the intended reader 101. But, if a malicious reader sends data instead of the intended reader 101, the message will result in random bits on the tag's memory 103, as the attacker does not know the pad P.

To further improve on this scheme, it may be possible to add a message integrity mechanism for the tag 102 to the message, in order to verify the decrypted message. Due to the properties of the one time pad (P), a cryptographically insecure message integrity mechanism such as CRC-32 is enough. Alternatively, or in addition, a reader 101 can verify the tag content the next time the tag 102 will be read.

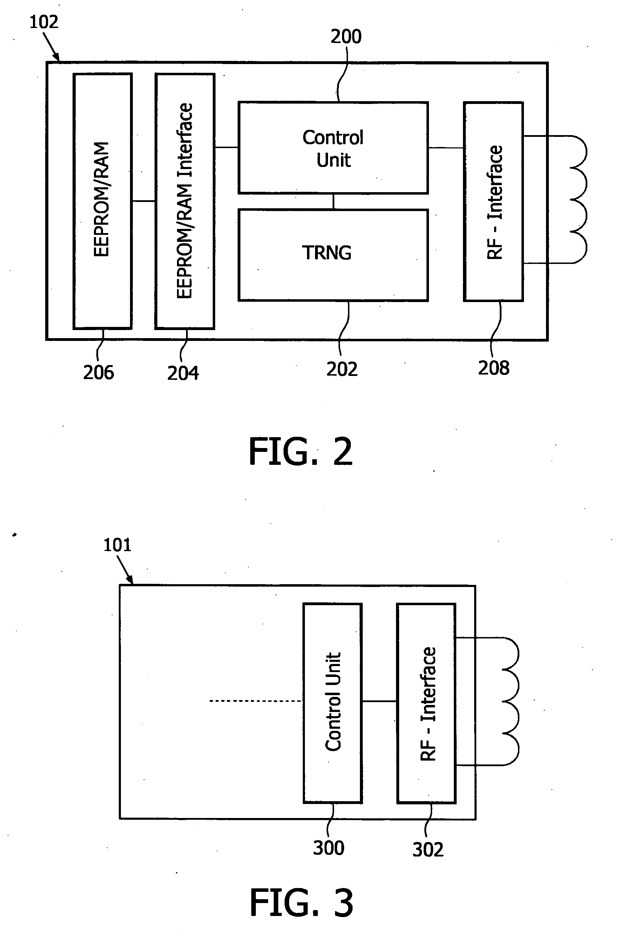

Fig. 2 shows an embodiment of a tag 102 according to the present invention. Only the main blocks needed in a contactless RFID tag 102 are shown. Particularly, the present invention relies on the presence of true random generator (TRNG) 202, for generating the random data. The contact pads in the analogue RF interface connect to the RF antenna 208 shown in the figure. Fig. 2 does not show the implementation of the TRNG 202 according to the present invention. Apart from an analog RNG block 202 that puts out a serial bitstream, such as the Intel^{®} Random Number Generator, this implementation requires at least a digital block 200. The digital block 200 retrieves of the right amount of random data (P) from the TRNG 202, and writes the random data (P), via a memory interface 204, onto a memory 206 such as a RAM or a flip-flop. The digital block 200 also sends the random data (P), via the RF interface 208, to the reader 101.

Fig. 3 shows an RFID reader 101 comprising an RF-interface 302 and a control unit 300. The control unit 300 may encrypt the information M₂ to be stored on the RFID tag 102, or optionally it may be connected to a back data processing unit performing the encryption.

In summary, the invention proposes to protect the relatively insecure reader-to-tag RFID communication with dedicated electronics, which is much cheaper than a full smartcard solution. Basically the RFID tag 102 is provided with a means to generate random data. When a reader 101 wants to write information to the tag 102, it first retrieves random data via the secure tag-to-reader communication channel. This data is used to encrypt the data to be written to the tag 102. Thus, encrypted data is sent via the insecure reader-to-tag channel and subsequently decoded in the tag 102. If an attack is carried out on the insecure channel, the attacker can only write meaningless data into the tag 102.

## Claims

1. An RFID tag (102) for storing information and communicating with an RFID reader (101), said RFID tag (102) comprising:
- means (208) for receiving (116) a request to write,
- means (202) for generating (118) random data (P),
- means (208) for sending (122) the random data (P),
- means (208) for receiving (124) encrypted information (E), **characterised by**
- means (200) for decrypting the received information (E) which information has been encryped by using the random data (P), by using the random data (P), and
- means (204, 206) for storing (126) the decrypted information (M₂).

2. A method of communicating between a RFID reader and (101) a RFID tag (102), said method comprising the steps of:
- sending (116), from the RFID reader (101) to the RFID tag (102), a request to write,
- generating, by the RFID tag (102), random data (P),
- sending (122), from the RFID tag (102) to the RFID reader (101), the random data (P),
- encrypting information (M₂) by using the random data (P),
- sending (124), from the RFID reader (101) to the RFID tag (102), the encrypted information (E),
- decrypting, by the RFID tag (102), the encrypted information (E) by using the random data (P), and
- storing (126), by the RFID tag (102) on a memory (103) of the RFID tag (102), the decrypted information (M₂).

3. The method of claim 2, wherein the step of generating (122) the random data (P) is followed by the step of:
- storing the random data (P), by the RFID tag (102), on a memory of the RFID tag (102).

4. The method of claim 2 or 3, wherein the random data (P) is derived from measuring any of thermal resistance noise, thermal shot noise, atmospheric noise and nuclear decay.

5. The method of any one of claims 2-4, wherein the random data (P) and decrypted information (M₂) are of the same length, thereby fulfilling the properties of a one time pad.

6. The method of any one of claims 2-5, wherein the step of decrypting the information is followed by the step of:
- overwriting or deleting, by the RFID tag (102), the random data (P)

7. The method of any one of claims 2-6, wherein said steps are preceded by the steps of:
- sending (110), from the RFID reader (101) to the RFID tag (102), a request to read, and
- sending (114), from the RFID tag (102) to the RFID reader (101), RFID tag information (M₁).

8. An RFID system comprising a RFID tag (102) according to claim 1 communicating with a RFID reader (101)

## Patentansprüche

1. Ein RFID-Etikett (102) zum Speichern von Informationen und Kommunizieren mit einem RFID-Leser (101), wobei das RFID-Etikett (102) umfasst:
- Mittel (208) zum Empfangen (116) einer Schreibanforderung,
- Mittel (202) zum Erzeugen (118) von Zufallsdaten (P),
- Mittel (208) zum Senden (122) der Zufallsdaten (P),
- Mittel (208) zum Empfangen (124) verschlüsselter Informationen (E), **gekennzeichnet durch**
- Mittel (200) zum Entschlüsseln der empfangenen Informationen (E), wobei die Informationen unter Verwendung der Zufallsdaten (P) verschlüsselt wurden, unter Verwendung der Zufallsdaten (P) und
- Mittel (204, 206) zum Speichern (126) der entschlüsselten Informationen (M₂).

2. Ein Verfahren zum Kommunizieren zwischen einem RFID-Leser (101) und einem RFID-Etikett (102), wobei das Verfahren folgende Schritte umfasst:
- Senden (116) einer Schreibanforderung vom RFID-Leser (101) zum RFID-Etikett (102),
- Erzeugen von Zufallsdaten (P) durch das RFID-Etikett (102),
- Senden (122) der Zufallsdaten (P) vom RFID-Etikett (102) zum RFID-Leser (101),
- Verschlüsseln von Informationen (M₂) unter Verwendung der Zufallsdaten (P),
- Senden (124) der verschlüsselten Informationen (E) vom RFID-Leser (101) zum RFID-Etikett (102),
- Entschlüsseln der verschlüsselten Informationen (E) durch das RFID-Etikett unter Verwendung der Zufallsdaten (P) und
- Speichern (126) der entschlüsselten Informationen (M₂) durch das RFID-Etikett (102) auf einem Speicher (103) des RFID-Etiketts (102).

3. Das Verfahren nach Anspruch 2, wobei dem Schritt des Erzeugens (122) der Zufallsdaten (P) folgender Schritt folgt:
- Speichern der Zufallsdaten (P) durch das RFID-Etikett (102) auf einem Speicher des RFID-Etiketts (102).

4. Das Verfahren nach Anspruch 2 oder 3, wobei die Zufallsdaten (P) abgeleitet werden von der Messung eines der Folgenden: thermisches Widerstandsrauschen, thermisches Stromrauschen, atmosphärisches Rauschen und Kernzerfall.

5. Das Verfahren nach einem der Ansprüche 2-4, wobei die Zufallsdaten (P) und die entschlüsselten Informationen (M₂) die gleiche Länge aufweisen, wodurch sie die Eigenschaften eines One-Time-Pad erfüllen.

6. Das Verfahren nach einem der Ansprüche 2-5, wobei dem Schritt des Entschlüsselns der Informationen folgender Schritt folgt:
- Überschreiben oder Löschen der Zufallsdaten (P) durch das RFID-Etikett (102).

7. Das Verfahren nach einem der Ansprüche 2-6, wobei den Schritten folgende Schritte vorangehen:
- Senden (110) einer Leseanforderung vom RFID-Leser (101) zum RFID-Etikett (102) und
- Senden (114) von RFID-Etikett-Informationen (M₁) vom RFID-Etikett (102) zum RFID-Leser (101).

8. Ein RFID-System, umfassend: ein RFID-Etikett (102) nach Anspruch 1, das mit einem RFID-Leser (101) kommuniziert.

## Revendications

1. Etiquette RFID (102) pour stocker des informations et pour communiquer avec un lecteur de RFID (101), ladite étiquette RFID (102) comprenant :
- des moyens (208) pour recevoir une requête (116) d'écriture,
- des moyens (202) pour générer (118) des données aléatoires (P),
- des moyens (208) pour envoyer (122) les données aléatoires (P),
- des moyens (208) pour recevoir (124) des informations chiffrées (E),
**caractérisé par**
- des moyens (200) pour déchiffrer les informations reçues (E), lesquelles informations ont été chiffrées en utilisant les données aléatoires (P), en utilisant les données aléatoires (P), et
- des moyens (204, 206) pour stocker (126) les informations déchiffrées (M₂).

2. Procédé de communication entre un lecteur de RFID (101) et une étiquette RFID (102), ledit procédé comprenant les étapes suivantes :
- envoi (116), du lecteur de RFID (101) à l'étiquette RFID (102), d'une requête d'écriture,
- génération, par l'étiquette RFID (102), de données aléatoires (P),
- envoi (122), de l'étiquette RFID (101) au lecteur de RFID (102), des données aléatoires (P),
- chiffrement des informations (M₂) à l'aide des données aléatoires (P),
- envoi (124), du lecteur de RFID (102) à l'étiquette RFID (101), des informations chiffrées (E),
- déchiffrage, par l'étiquette RFID (102), des informations chiffrées (E) en utilisant les données aléatoires (P), et
- stockage (126), par l'étiquette RFID (102) dans une mémoire (103), de l'étiquette RFID (102), des informations déchiffrées (M₂).

3. Procédé selon la revendication 2, dans lequel l'étape de génération (122) des données aléatoires (P) est suivie par l'étape de :
- stockage des données aléatoires (P), par l'étiquette RFID (102), dans une mémoire de l'étiquette RFID (102).

4. Procédé selon la revendication 2 ou 3, dans lequel les données aléatoires (P) sont déduites d'une mesure, parmi les mesures du bruit thermique d'une résistance, d'un bruit de grenaille, d'un bruit atmosphérique ou d'une désintégration nucléaire.

5. Procédé selon l'une quelconque des revendications 2 à 4, dans lequel les données aléatoires (P) et les informations déchiffrées (M₂) sont de la même longueur, vérifiant ainsi les propriétés de séquence cryptographique jetable.

6. Procédé selon l'une quelconque des revendications 2 à 5, dans lequel l'étape de déchiffrement des informations est suivie de l'étape :
- d'écrasement ou d'effacement, par l'étiquette RFID (102), des données aléatoires (P).

7. Procédé selon l'une quelconque des revendications 2 à 6, dans lequel lesdites étapes sont précédées par les étapes suivantes :
- envoi (110), par le lecteur de RFID (101) à l'étiquette RFID (102), d'une requête de lecture, et
envoi (114), par l'étiquette RFID (102) au lecteur de RFID (101), des informations d'étiquette RFID (M₁).

8. Système de RFID comprenant une étiquette RFID (102) selon la revendication 1, communiquant avec un lecteur de RFID (101).
